# EUROPEAN PATENT APPLICATION

(11) **EP 4 102 317 A1**
(43) Date of publication of application: **14.12.2022**
(21) Application number: 20917764.1
(22) Date of filing: 07.02.2020
(51) Int. Cl.: G05B 19/418, G06Q 50/04

(54) **SCHEDULE DATA PREPARATION DEVICE AND SCHEDULE DATA PREPARATION METHOD**

(71) Applicant: NISSAN MOTOR CO., LTD., Yokohama-shi, Kanagawa 221-0023 (JP)
(72) Inventor: SAKUNAGA Ikuo, Atsugi-shi, Kanagawa 243-0123 (JP)
(74) Representative: Global IP Europe Patentanwaltskanzlei
(86) International application number: PCT/JP2020/004918
(87) International publication number: WO 2021/157080

(57) **Abstract**

A schedule data creation device (1) creates schedule data (SD) that define an execution schedule for executing a plurality of jobs of different types in chronological order. An input/output unit (13) acquires table data (TD) in which the schedule conditions are described in tabular format for each combination of jobs, and acquires request data (RD) that specify a plurality of jobs for which the schedule data (SD) are to be created. A schedule data creation device (12) arranges a plurality of jobs in chronological order based on the table data (TD) such that each of the plurality of jobs specified in the request data (RD) meets the schedule conditions, in order to create the schedule data (SD). The input/output unit (13) outputs the schedule data (SD) and the table data (TD).

## Description

### Technical Field

The present invention relates to a schedule data creation device and a schedule data creation method.

### Background Art

For example, Patent Document 1 discloses a schedule data creation device that uses a trained model to generate a usage schedule of a medical facility. In Patent Document 1, the schedule generation device comprises an acquisition unit that acquires operation list data and a trained model, and a generation unit that generates medical facility schedule data. The acquisition unit stores the acquired operation list data and the trained model in a storage unit. The generation unit generates the medical facility schedule data, which is a schedule for a prescribed period of the medical facility based on the operation list data and the trained model stored in the storage unit.

### Prior Art Documents

### Patent Documents

Patent Document 1: Japanese Laid-Open Patent Application No. 2020-003862

### Summary of the Invention

### Problem to be Solved by the Invention

When a schedule that cannot be handled using a calculation formula is constructed, it is necessary to provide training data, which include source code written in a computer language, to the schedule data creation device. However, the source code is data with a technical structure. The task of creating training data is extremely complex and is labor-intensive. Further, the task of maintaining or improving the training data is also complicated, requiring many man-hours.

Given the problems described above, an object of the present invention is to provide a schedule data creation device and a schedule data creation method with which schedule data can be created from data that have a simple structure.

### Means to Solve the Problem

A schedule data creation device according to one aspect of the present invention acquires table data, in which schedule conditions are described in a tabular format for each combination of jobs, and acquires request data that specifies a plurality of jobs for which schedule data are to be created. The schedule data creation device arranges a plurality of jobs in chronological order based on the table data, such that each of the plurality of jobs specified in the request data meets the schedule conditions, to thereby create the schedule data. The schedule data creation device outputs the schedule data or the table data.

### Effects of the Invention

By means of the present invention, the schedule data can be created from data that have a simple structure.

### Brief Description of the Drawings

Figure 1 is a block diagram showing the configuration of a schedule data creation device according to the present embodiment.
Figure 2 is a flowchart showing the process flow related to a schedule data creation method according to the present embodiment.
Figure 3 is an explanatory diagram showing a binary table defined by the table data.
Figure 4 is an explanatory diagram showing an order of priority of task items.
Figure 5 is an explanatory diagram showing request data.
Figure 6 is an explanatory diagram showing one example of limiting conditions.
Figure 7 is an explanatory diagram showing one example of limiting conditions.
Figure 8 is an explanatory diagram showing a new binary table.

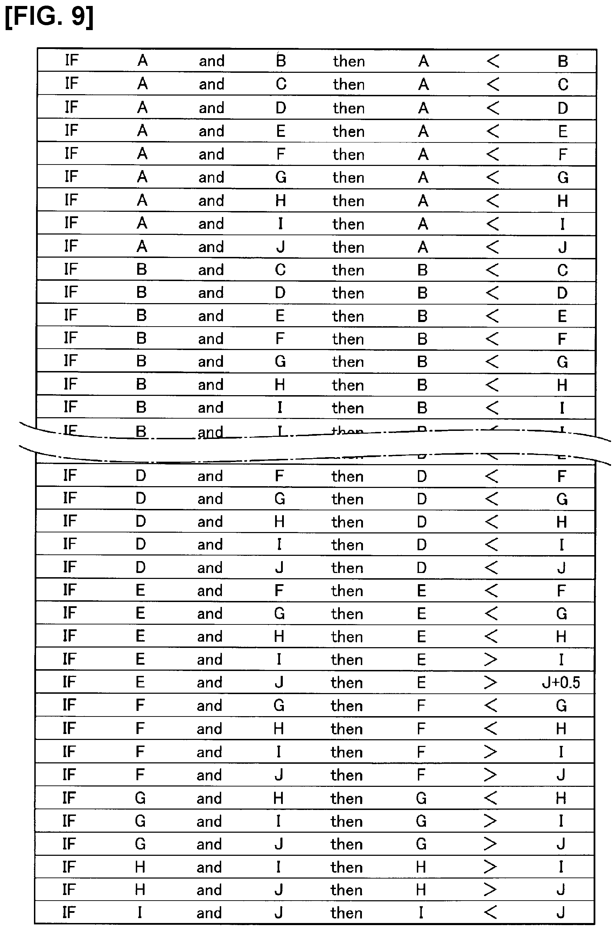

Figure 9 is an explanatory diagram showing schedule conditions described in source code.
Figure 10 is an explanatory diagram showing a basic array of a plurality of task items specified in the request data.
Figure 11 is an explanatory diagram of a vehicle prototype schedule defined by the schedule data.
Figure 12 is an explanatory diagram of a vehicle prototype schedule defined by the schedule data.

### Embodiments for Implementing the Invention

Embodiments of the present invention will be described below with reference to the drawings. In the descriptions of the drawings, identical parts have been assigned the same reference numerals, and their descriptions have been omitted.

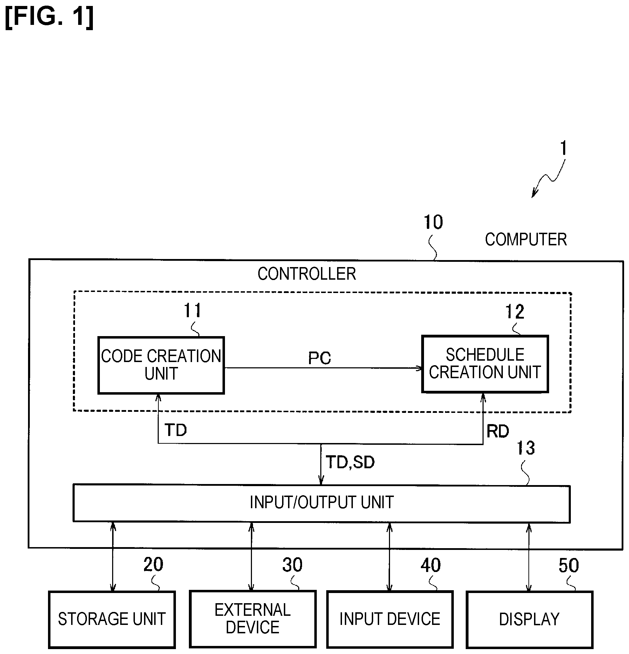

A configuration of a schedule data creation device 1 will be described with reference to Figure 1. The schedule data creation device 1 according to the present embodiment creates schedule data SD. The schedule data SD are data defining an execution schedule for executing a plurality of jobs of different job types in chronological order. Here, a "job" is a generic term for various tasks that can be executed in chronological order.

In the present embodiment, a vehicle prototype schedule for prototyping a hybrid vehicle will be used as an example. That is, a "job" is a task item required for the prototyping of a hybrid vehicle. There are a plurality of types of task items, such as vehicle body assembly, painting, and parts assembly, and the schedule data SD define the vehicle prototype schedule for executing a plurality of task items of different types in chronological order. That is, a plurality of various task items can be executed in chronological order in accordance with the vehicle prototype schedule defined by the schedule data SD in order to prototype a hybrid vehicle.

The schedule data creation device 1 primarily comprises a computer 10 and a storage unit 20.

The computer 10 primarily comprises a CPU, ROM, RAM, an input/output interface, and the like. A computer program is installed in the computer 10 to cause the computer 10 to function as the schedule data creation device 1. By executing the computer program, the computer 10 functions as a plurality of information processing circuits included in the schedule data creation device 1. In the present embodiment, an example is shown in which the plurality of information processing circuits included in the information output device is realized in software, but the information processing circuits can, of course, be realized in dedicated hardware for executing each of the information processes shown below. Further, the plurality of information processing circuits may be realized in discrete hardware.

The computer 10 includes a code creation unit 11 (control unit), a schedule creation unit 12, and an input/output unit 13 (input unit, output unit) as the plurality of information processing circuits.

The code creation unit 11 rewrites table data TD into source code. The table data TD are data in which schedule conditions are described in a tabular format for each combination of task items. Here, the schedule conditions are conditions that different types of task items should satisfy on a time axis. The source code, on the other hand, is code written in a computer language that encodes instructions to be processed by a computer.

The schedule creation unit 12 creates the schedule data SD based on request data RD and the source code created by the code creation unit 11. The request data RD are data specifying the plurality of task items for which the schedule data SD are to be created, from among all of the types of task items described in the table data TD. That is, the plurality of task items specified in the request data RD include two or more task items selected from among all of the types of task items described in the table data TD. However, the plurality of task items specified in the request data RD may include all of the types of task items described in the table data TD.

The schedule creation unit 12 arranges the plurality of task items in chronological order based on the source code such that each of the plurality of task items specified in the request data RD meets the schedule conditions in order to create the schedule data SD.

The storage unit 20 and an external device 30 are connected to the input/output unit 13. The input/output unit 13 acquires the table data TD and the request data RD from the storage unit 20, for example. Alternatively, the input/output unit 13 acquires the table data TD and the request data RD from the external device 30.

An input device 40 into which a user inputs information is connected to the input/output unit 13. The input/output unit 13 can acquire the information that the user inputs using the input device 40.

Further, the input/output unit 13 outputs the schedule data SD and the table data TD to the external device 30. The input/output unit 13 can also output the schedule data SD and the table data TD to a display 50, which displays information.

The storage unit 20 stores the table data TD and the request data RD that the input/output unit 13 acquired from the external device 30. Further, the storage unit 20 stores the schedule data SD created by the schedule creation unit 12.

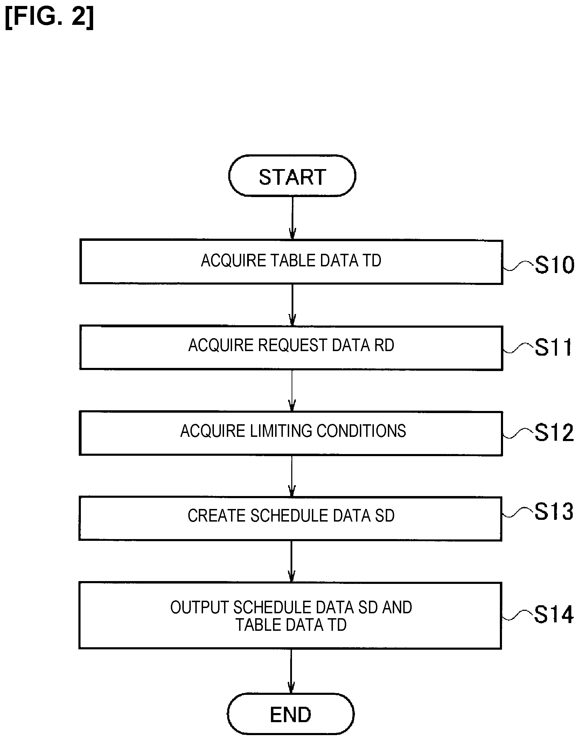

A schedule data creation method executed by the schedule data creation device 1 according to the present embodiment will be described with reference to Figure 2.

In the following explanation, it is assumed that three types of hybrid vehicles, corresponding to a sedan, a station wagon, and a minivan, are prototyped.

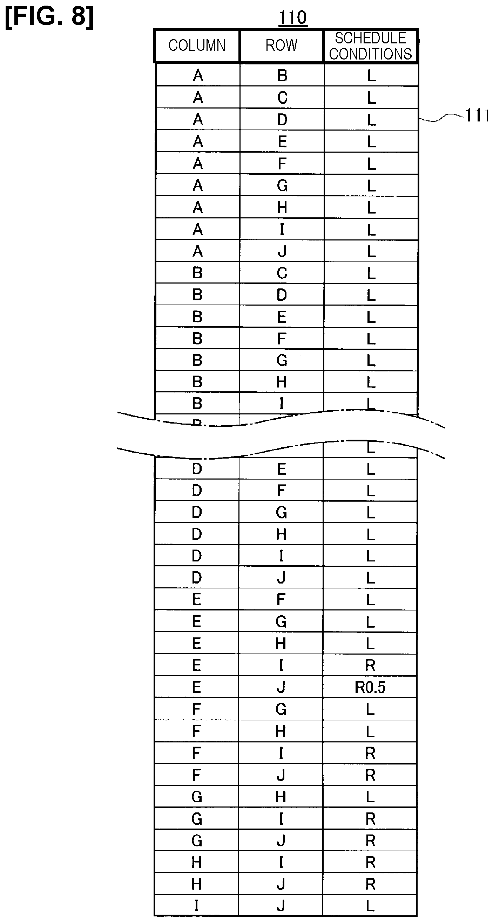

It is assumed that in order to prototype a hybrid vehicle, ten types of task items are necessary: (A) vehicle body assembly, (B) painting, (C) underfloor assembly, (D) first body assembly, (E) modular parts assembly, (F) second body assembly, (G) chassis parts assembly, (H) assembly adjustment, (I) modular parts assembly, and (J) modular parts transport. Hereinbelow, when a task item in the drawings is described, only the letters from A to J may be used in place of specific names (e.g., Figure 8).

Here, vehicle body assembly is the work of assembling the vehicle body, and painting is the work of painting the vehicle body. Underfloor assembly is the work of assembling the underfloor, and is the work of assembling the first body, the second body, and other vehicle body parts. Modular parts assembly is the work of assembling modularized parts, such as lithium ion batteries. Chassis parts assembly is the work of assembling chassis parts. Assembly adjustment is the work of adjusting the assembled parts. Modular parts assembly is the work of assembling a plurality of parts to create modularized parts. Modular parts transport is the work of transporting modularized parts.

First, in Step S10, the input/output unit 13 acquires the table data TD. The table data TD acquired by the input/output unit 13 are utilized by the code creation unit 11, as described further below.

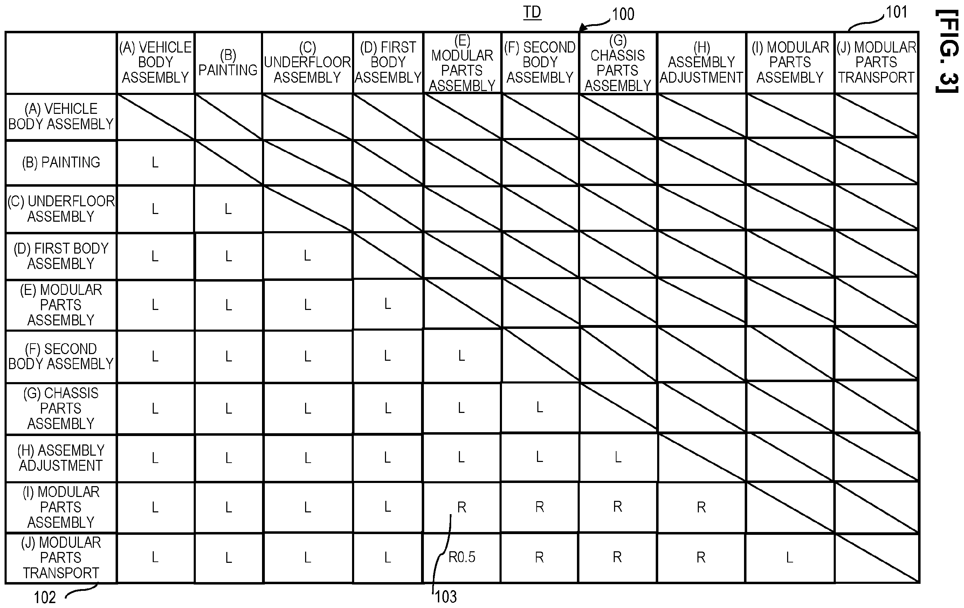

As shown in Figure 3, the table data TD are set according to a binary table 100 defined by an item group 101 in the column direction and an item group 102 in the row direction. In the binary table 100, the types of the task items are respectively described in the item group 101 in the column direction and the item group 102 in the row direction. Schedule conditions are described in the cells 103 that are in the intersecting locations of the types of task items described in the item group 101 in the column direction and the types of task items described in the item group 102 in the row direction.

Either an "L" or an "R" is entered is each of the cells 103. "L" means that the task item described in the item group 101 in the column direction is executed before the task item described in the item group 102 in the row direction. In contrast, "R" means that the task item described in the item group 101 in the column direction is executed after the task item described in the item group 102 in the row direction. For example, an "L" is entered in the cell 103 at the intersecting location of the "vehicle body assembly" described in item group 101 in the column direction and the "painting" described in the item group 102 in the row direction. From this entry, a user can understand that the vehicle body is assembled before painting is executed.

In addition to an "L" or an "R", a number is entered in each of the cells 103. This number indicates the interval (time) required between the task item described in the item group 101 in the column direction and the task item described in the item group 102 in the row direction. For example, "R 0.5" is entered in the cell 103 at the intersecting location of the "modular parts assembly" described in item group 101 in the column direction and the "modular parts transport" described in the item group 102 in the row direction. From this entry, a user can understand that the modular parts assembly takes place 0.5 hours or more after the modular parts are transported.

The schedule conditions of each of the cells 103 include the relative before/after relationship between different types of task items, i.e., whether the task item described in the item group 101 in the column direction is executed before or after the task item described in the item group 102 in the row direction. Further, the schedule conditions include the intervals required between different types of task items. When it is not necessary to provide an interval, only an "L" or an "R" is entered in the binary table 100, and numbers are omitted.

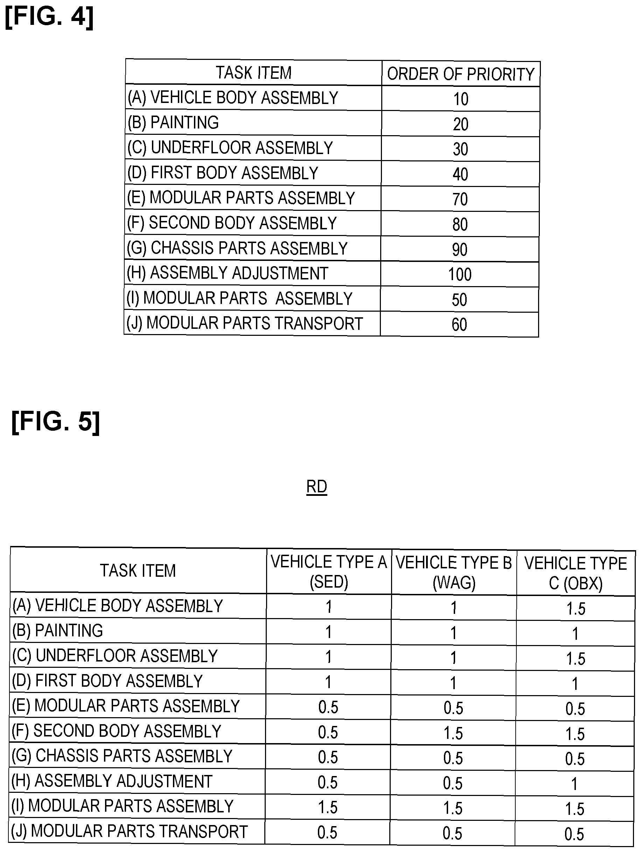

The order of priority evaluated on a time axis is preset for each task item. In the example shown in Figure 4, the order of priority is indicated by a number, wherein the task item with a smaller number means that the task must be carried out at an earlier timing. The binary table 100 defined in the table data TD are created in advance based on the order of priority set for each task item.

In Step S11, the input unit 13 acquired the request data RD. The request data RD acquired by the input unit 13 are used by the schedule creation unit 12. In the example shown in Figure 5, the plurality of task items specified in the request data RD correspond to all the types of task items described in the table data TD.

Further, in the request data RD, the required time, which is the time required to execute the task item, is associated with each of the plurality of task items. In the request data RD shown in Figure 5, the required times for a plurality of task items are associated for each vehicle type A corresponding to sedans (SED), vehicle type B corresponding to station wagons (WAG), and vehicle type C corresponding to minivans (OBX).

In Step S12, the input unit 13 acquires limiting conditions. Limiting conditions are conditions of the vehicle prototype schedule other than the schedule conditions that should be satisfied. The limiting conditions are converted into data in a preset format and are acquired from the storage unit 20 or the external device 30 by the input unit 13. The request data RD acquired by the input unit 13 are used by the schedule creation unit 12. In the present embodiment, three limiting conditions are presented as examples.

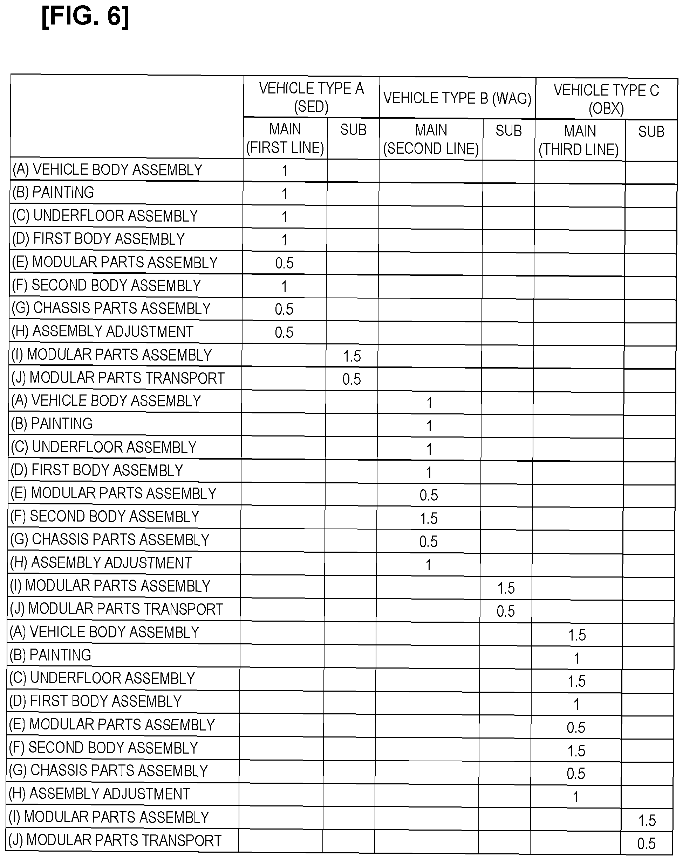

The first limiting condition is, for example, a limitation corresponding to a production line. An outline of the first limiting condition is shown in Figure 6. A hybrid vehicle is prototyped using a main line and a sub-line. The main line is a line (execution entity) that executes 8 items, including the vehicle body assembly, painting, underfloor assembly, first body assembly, modular parts assembly, second body assembly, chassis parts assembly, and assembly adjustment. There are three main lines, the first through the third lines, and a main line is assigned to each of the three vehicle types.

The sub-line, on the other hand, is a line (execution entity) that executes two items, which includes the modular parts assembly and modular parts transport. There is only one sub-line. Therefore, the three modular parts used in the three vehicle types are prototyped in series in the sub-line.

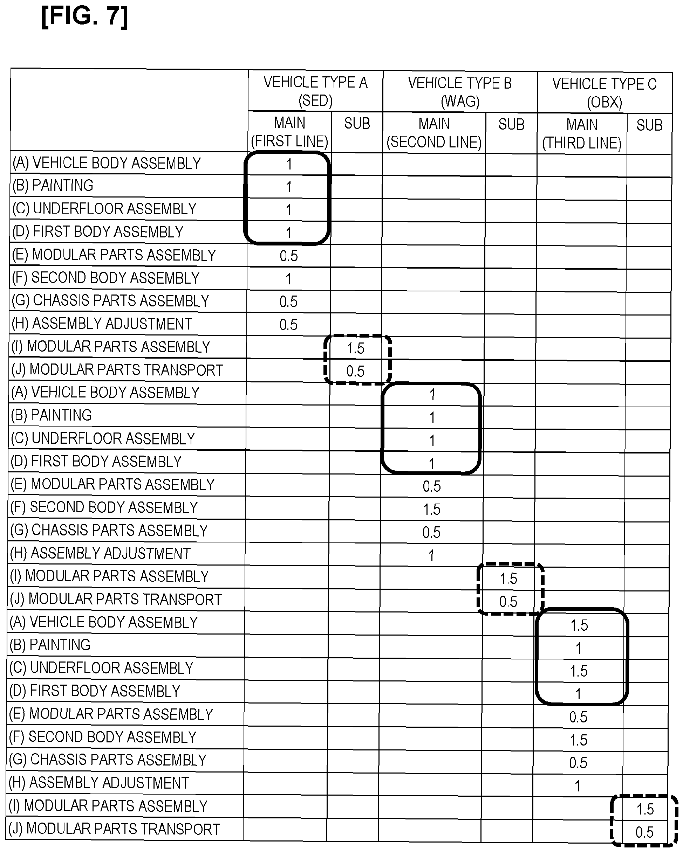

The second limiting condition is, for example, a limitation corresponding to grouping the plurality of task items. An outline of the second limiting condition is shown in Figure 7. The vehicle body assembly, painting, underfloor assembly, and first body assembly should be performed consecutively. Thus, these task items are grouped such that they cannot be executed in a distributed manner. Similarly, the modular parts assembly and the modular parts transport should be performed consecutively. Thus, these task items are grouped such that they cannot be executed in a distributed manner.

The third limiting condition is a limitation of synchronization between different lines. If there is a connection between a task item executed on the main line and a task item executed on the sub-line, it is necessary to synchronize the lines. The modular parts assembly that is executed on the main line is the work of assembling modular parts that are transported by means of the modular parts transport executed on the sub-line. As a result, synchronization limitation is applied to the modular parts assembly and the modular parts transport.

If there is a plurality of limiting conditions, an order of priority is imposed on these limiting conditions. As a result, it is possible to recognize in what order the limiting conditions should be applied. In the present embodiment, the limiting conditions are prioritized in the order of first limiting condition, second limiting condition, and third limiting condition.

In Step S13, the code creation unit 11 and the schedule creation unit 12 create the schedule data SD based on the table data TD, the request data RD, and the limiting conditions. The process for creating the schedule data SD will be specifically described below.

First, the code creation unit 11 organizes the binary table 100 defined by the table data TD and converts it into a binary table 110. The binary table 110 is defined by three item groups in the column direction, and a plurality of cell sets 111 are prepared in the row direction. The code creation unit 11 extracts from the binary table 100 one set of different types of task items, and schedule conditions described in the cells 103 that are in the intersection positions of the one set of task items. The code creation unit 11 then describes the extracted information in the cell sets 111.

In each of the cell sets 111, the task item described in the item group 101 in the column direction of the binary table 110 is described in the cell of the leftmost column. Further, the task item described in the item group 102 in the row direction of the binary table 110 is described in the cell of the center column. The schedule condition is described in the cell of the rightmost column. The rule for such a description method is set in advance, and the code creation unit 11 creates the binary table 110 in accordance with the rule. Therefore, the binary table 110 can be interpreted based on this rule, so that the meaning of the binary table 110 can be understood. For example, "A, B, L" may be entered in the cell set 111 of a certain row, from the left to the right columns. In this case, the user can read the cell set 111 from left to right in order to understand the condition that the vehicle body is assembled before it is painted.

The format of the table data TD acquired by the input/output unit 13 may be the binary table 110 instead of the binary table 100. In this case, the code creation unit 11 can omit the process to convert the binary table 100 into the binary table 110.

The code creation unit 11 rewrites the table data TD, specifically, the data described in the cell sets 111 of the binary table 110, as source code. The rewriting into source code is carried out for all of the cell sets 111 described in the binary table 110.

In the present embodiment, the source code is written using "IF" and "then." Specifically, the code creation unit 11 extracts the data described in the cell sets 111. For example, "A, B, L" are entered in a certain cell set 111, from the left to the right columns. After the data from this cell set 111 is extracted, the code creation unit 11 writes the source code "IF A and B, then A < B." From the source code, the computer 10 understands the condition that if there are task items "A" and "B," then "A" is smaller than "B." In the source code, the relationship that "A" and "B" should satisfy on the time axis is replaced with the magnitude relation that "A" is less than "B."

Similarly, "E, I, R" are entered in a certain cell set 111, from the left to the right columns. After data from this cell set 111 is extracted, the code creation unit 11 writes the source code "IF E and I, then E > I." The computer 10 can understand from this source code the condition that if there are task items "E" and "I," then "E" is larger than "I." In the source code, the relationship that "E" and "I" should satisfy on the time axis is replaced with the magnitude relation that "E" is greater than "I."

Further, "E, J, R 0.5" are entered in a certain cell set 111, from the left to the right columns. After data from this cell set 111 is extracted, the code creation unit 11 writes the source code "IF E and J, then E > J + 0.5." From the source code, the computer 10 understands the condition that if there are task items "E" and "J," then "E" is larger than "J + 0.5." In the source code, the relationship that "E" and "J" should satisfy on the time axis is replaced with the magnitude relation that "E" is greater than "J + 0.5."

The computer 10 can replace the magnitude relation that is understood from the source code with a chronological relationship, so that the conditions that different types of task contents should satisfy on a time axis, that is, the schedule conditions, can be understood. The code creation unit 11 outputs the created source code to the schedule creation unit 12.

The schedule creation unit 12 creates the schedule data SD based on the request data RD. First, the schedule creation unit 12 arranges each of ten task items specified in the request data RD in chronological order, thereby creating a basic array of the vehicle prototype schedule. The basic array of the vehicle prototype schedule is created such that each of the ten task items satisfies the magnitude relation (schedule conditions) defined in the source code. That is, based on the source code, the schedule creation unit 12 compares the magnitude relations of the ten task items with each other and arranges the evaluated task items in ascending order. The limiting conditions are also considered when the arrangement of the task items is ordered.

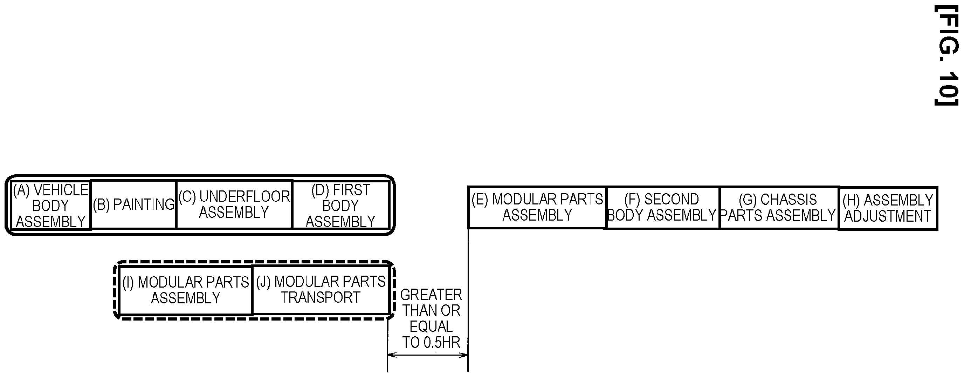

As shown in Figure 10, the schedule creation unit 12 separates the ten task items specified in the request data RD into the main line and the sub-line, and arranges the task items for each line. As a result, the first limiting condition is reflected.

In the main line, eight task items are to be arranged. The schedule creation unit 12 arranges the eight task items from left to right based on the source code such that each of the eight task items satisfies the magnitude relations (that is, the schedule conditions) defined in the source code. As a result, the eight task items are arranged in the order of vehicle body assembly, painting, underfloor assembly, first body assembly, modular parts assembly, second body assembly, chassis parts assembly, and assembly adjustment. After the eight task items are arranged, if the arrangement of the task items does not satisfy the second limiting condition, the arrangement is corrected so that the second limiting condition is satisfied. As a result, the vehicle body assembly, painting, underfloor assembly, and first body assembly will be arranged as a group, thereby reflecting the second limiting condition.

In the sub-line, two task items are arranged. The schedule creation unit 12 arranges the two task items from left to right based on the source code such that the two task items satisfy the magnitude relationship (that is, the schedule conditions) defined in the source code. As a result, the two task items are arranged in the order of modular parts assembly and modular parts transport. After the two task items are arranged, if the arrangement of the task items does not satisfy the second limiting condition, the arrangement is corrected so that the second limiting condition is satisfied. As a result, the modular parts assembly and the modular parts transport will be arranged as a group, thereby reflecting the second limiting condition.

Further, the execution of modular parts assembly presupposes modular parts transport. The execution of the modular parts assembly and the modular parts transport are interconnected. In this case, even if the task items are divided into the main line and the sub-line, the schedule creation unit 12 arranges each of the task items so that the magnitude relation defined in the source code is satisfied. That is, the schedule creation unit 12 arranges the modular parts assembly so that it is preceded by the modular parts transport, and sets an interval of 0.5 hours or more between the modular parts transport and the modular parts assembly. As a result, the third limiting condition is reflected.

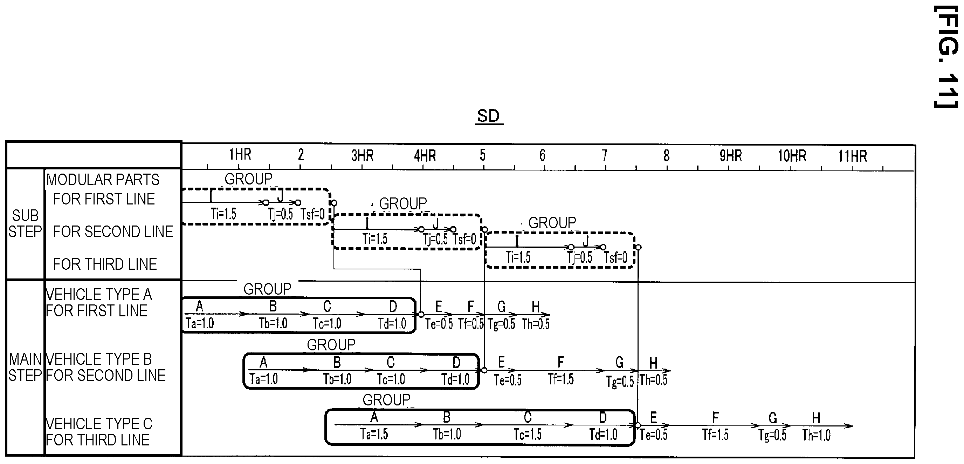

The schedule creation unit 12 creates the schedule data SD corresponding to each of the three vehicle types on the premise of the basic array of the vehicle prototype schedule. The schedule data SD are defined by a time-series chart in which a plurality of task items are arranged in chronological order on a time axis. As shown in Figure 11, the ten task items are arranged in chronological order on the time axis in accordance with the arrangement shown in the basic array of the vehicle prototype schedule. In this time-series chart, each task item is displayed as having a length that corresponds to the required time Ta to Tj. In the time-series chart, the task items are arranged separately for each of the main line and the sub-line. Further, because three lines corresponding to the vehicle types are present on the main line, the schedule of each line is shown in parallel. On the other hand, because the sub-line is composed of one line, the schedules corresponding to the three vehicle types are shown in series.

The schedule data SD is created through such a series of processes. In the present embodiment, the schedule data SD are defined by a time-series chart in which a plurality of task items are arranged in chronological order on a time axis. By means of this schedule data SD, it is possible to understand the execution schedule for executing the plurality of task items in chronological order, from the arrangement of the plurality of task items in the time-series.

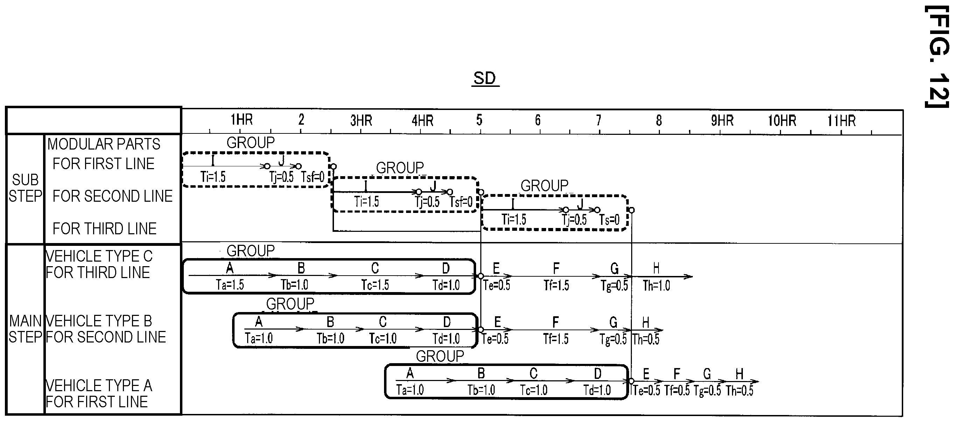

When the schedule data SD is created, there may be a plurality of patterns of candidates for the arrangement of the task items. In this case, as shown in Figure 12, a combination in which the shortest total work hours may be employed as the final solution of the schedule data SD. However, this concept is merely an example, and elements necessary for prototyping a hybrid vehicle may be taken into consideration to arrive at the final solution for the schedule data SD.

In Step S14, the input/output unit 13 outputs the schedule data SD and the table data TD.

In this embodiment, the input/output unit 13 acquires the table data TD in which the schedule conditions are described in tabular format for each combination of task items and acquires the request data RD that specify a plurality of task items for which the schedule data SD are to be created. The schedule creation unit 12 arranges the plurality of task items in chronological order based on the table data TD such that each of the plurality of task items specified in the request data RD meets the schedule conditions. As a result, the schedule creation unit 12 creates a time-series chart in which the plurality of task items are arranged in chronological order as the schedule data SD. The input/output unit 13 outputs the schedule data SD created by the schedule creation unit 12 and outputs the table data TD used for creating the schedule data SD.

According to the present embodiment, the table data TD are data in which schedule conditions are described in tabular format for each combination of task items, and are created with a simple structure. Therefore, the user can easily create the table data TD and easily understand the content described in the table data TD. Further, since the schedule data creation device 1 can output the table data TD, it is possible to provide the user with the opportunity of using the table data TD. In this case as well, the user can easily understand the content described in the table data TD. As a result, maintaining or changing the table data TD becomes a simple matter. In this manner, the schedule data creation device 1 can create the schedule data SD from data with a simple structure.

Further, in the present embodiment, the plurality of task items are executed by one or a plurality of execution entities, such as the main line and the sub-line. Task items that are executed by the same execution entity do not overlap in the periods for executing the task items.

Task items that are executed by the same execution entity have a relationship in which their periods for executing the task items do not overlap. In this type of task items, a plurality of task items can be arranged in chronological order to thereby reliably create the schedule data SD.

In the present embodiment, the required time with respect to each of the plurality of task items is associated with the required data RD. The schedule creation unit 12 arranges the plurality of task items in chronological order in consideration of the required time.

As a result, it is possible to arrange the plurality of task items in chronological order in consideration of the time required to complete each of the task items. Thus, it is possible to reliably create the schedule data SD.

The code creation unit 11 rewrites the table data TD into source code describing commands to be processed by the computer. The schedule creation unit 12 arranges the plurality of task items in chronological order based on the source code.

By using this configuration, by rewriting the table data TD into the source code, the schedule creation unit 12 can process the contents described in the table data TD as commands. As a result, because the schedule creation unit 12 can understand the table data TD from the source code, the schedule data SD can be appropriately created.

The schedule conditions include the relative before/after relationship when different types of task items are executed, as well as the intervals required between the different types of task items.

By using this configuration, the before/after relationship and the intervals can be used to define the conditions that different types of task items should satisfy on the time axis. As a result, it is possible to appropriately recognize the order of priority of the plurality of task items and to create the schedule data SD.

Further, the table data TD are the binary table 100 defined by the item groups in the row and column directions. The types of the task items are respectively described in the item group 101 in the column direction and the item group 102 in the row direction. Schedule conditions are described at the intersecting locations of the types of task items described in the item group 101 in the column direction and the types of task items described in the item group 102 in the row direction.

According to this configuration, the table data TD are composed of the binary table 100. Thus, the user can easily ascertain the schedule conditions of the different types of task items from the binary table 100 defined in the table data TD. As a result, the complexity entailed in the creation of the table data TD is reduced. Further, it is sufficient to analyze the binary table 100, so that it is possible to improve workability, such as correcting the table data TD.

Further, the input/output unit 13 acquires the table data TD input from the external device 30.

By using this configuration, the schedule data creation device 1 can use the table data TD created by the external device 30.

The input/output unit 13 may acquire schedule conditions from the input device 40 into which the user inputs information, and generate the table data TD based on the schedule conditions, to thereby acquire the table data. For example, the user uses the input device 40 to input a combination of task items and schedule conditions corresponding to this combination. The form of input by means of the input device 40 is voice or a character string. At this time, the user inputs the combination of task items and the schedule conditions in accordance with a preset sentence structure. For example, the user inputs " 'vehicle body assembly' is executed 'before' 'painting.‴ The input/output unit 13 understands the sentence structure of the input sentence and creates the binary table 100. Specifically, for example, in the binary table 100, the input/output unit 13 enters "vehicle body assembly" in the item group 101 in the column direction, enters "painting" in the item group 102 in the row direction, and enters "L" in the cell 103 at the intersecting location of these task items.

By using this configuration, the schedule data creation device 1 itself can create the table data TD in accordance with the schedule conditions input by the user. In this case, since the user need only input the schedule conditions, etc., in the form of a sentence, complicated work is not required.

The schedule creation unit 12 also takes into consideration the limiting conditions, which are conditions that should be satisfied besides the schedule conditions of the execution schedule, in order to arrange the plurality of task items in chronological order.

By using this configuration, since conditions other than the schedule conditions can be imposed, it is possible to create schedule data in consideration of various viewpoints.

Examples of limiting conditions include the preferential order of which type of vehicle to prototype, the capacity of the prototype facility, such as the number of lines, the number of vehicles that can be prototyped in a given period, the prototype location where the prototyping is performed, and the transport period for transporting parts to the prototype location.

Further, a schedule data creation method according to the foregoing embodiment has technical features corresponding to the schedule data creation device 1 described above, and has the same effects as the schedule data creation device 1. An embodiment of the present invention was described above, but the descriptions and figures that form part of this disclosure should not be understood as limiting the present invention. From this disclosure, various alternative embodiments, examples, and operating techniques should be apparent to those skilled in the art.

For example, the schedule data creation device and the schedule data creation method according to the present embodiment were described with respect to a vehicle prototype schedule for prototyping a vehicle. However, the execution schedule may be any schedule in which a plurality of different job types are executed in chronological order, or an experiment schedule in which various types of experiments are executed with respect to prototype vehicles in chronological order. Moreover, the execution schedule may pertain to a dispatch schedule, in which a service vehicle which provides services to passengers executes various types of tasks in chronological order.

### Descriptions of the Reference Symbols

- 1: Schedule data creation device
- 10: Computer
- 11: Code creation unit (control unit)
- 12: Schedule creation unit
- 13: Input/output unit (input unit, output unit)
- 20: Storage unit
- TD: Table data
- SD: Schedule data
- RD: Request data

## Claims

1. A schedule data creation device that creates schedule data defining an execution schedule for executing a plurality of jobs of different job types in chronological order, the schedule data creation device comprising:
an input unit, a control unit, and an output unit,
the input unit being configured to acquire table data in which schedule conditions, which are conditions that the different job types should satisfy on a time axis, are described in tabular format for each combination of the jobs, and to acquire request data specifying the plurality of jobs for which the schedule data are to be created from among all of the job types described in the table data,
the control unit being configured to arrange the plurality of jobs in chronological order based on the table data such that each of the plurality of jobs specified in the request data meets the schedule conditions to create the schedule data, and
the output unit being configured to output the schedule data created by the control unit and outputs the table data used to create the schedule data.

2. The schedule data creation device according to claim 1, wherein
the plurality of jobs are executed by one or a plurality of execution entities, and
the jobs that are executed by the same execution entity do not overlap in a period for executing the jobs.

3. The schedule data creation device according to claim 2, wherein
the request data is associated with a required time, which is a time required to execute the job, for each of the plurality of jobs, and
the control unit is configured to arrange the plurality of jobs in chronological order in consideration of the required time.

4. The schedule data according to any one of claims 1 to 3, wherein
the control unit is configured to rewrite the table data into source code describing commands to be processed by a computer, and arrange the plurality of jobs in chronological order based on the source code.

5. The schedule data according to any one of claims 1 to 4, wherein
the schedule conditions include a relative before/after relationship when executing the jobs of the different job types, and a required interval between the jobs of the different job types.

6. The schedule data according to any one of claims 1 to 5, wherein
the table data are a binary table defined by an item group in the row direction and an item group in the column direction,
the job types are respectively described in the item group in the column direction and the item group in the row direction, and
the schedule conditions are described at intersecting locations of the job types described in the item group in the column direction and the job types described in the item group in the row direction.

7. The schedule data according to any one of claims 1 to 6, wherein
the input unit is configured to acquire the table data input from an external device.

8. The schedule data according to any one of claims 1 to 6, wherein
the input unit is configured to acquire the schedule conditions from an input device into which a user inputs information, and generate the table data based on the schedule conditions in order to acquire the table data.

9. The schedule data according to any one of claims 1 to 8, wherein
the control unit further considers limiting conditions, which are conditions besides the schedule conditions in the execution schedule which should be satisfied, in order to arrange the plurality of jobs in chronological order.

10. A schedule data creation method for creating schedule data defining an execution schedule for executing a plurality of jobs of different job types in chronological order, comprising:
using a computer to
acquire table data in which schedule conditions, which are conditions that the different job types should satisfy on a time axis, are described in tabular format for each combination of the jobs,
acquire request data specifying the plurality of jobs for which the schedule data are to be created from among all of the job types described in the table data,
arrange the plurality of jobs in chronological order based on the table data such that each of the plurality of jobs specified in the request data meets the schedule conditions to create the schedule data,
outputs the schedule data created by the control unit, and
outputs the table data used to create the schedule data.
